(19) Europäisches Patentamt
European Patent Office
Office européen des brevets

(11) EP 2 325 249 A1

(12) **EUROPÄISCHE PATENTANMELDUNG**

(43) Veröffentlichungstag:
**25.05.2011 Patentblatt 2011/21**

(51) Int Cl.:
***C08L 23/16*** *(2006.01)*

(21) Anmeldenummer: **10187980.7**

(22) Anmeldetag: **19.10.2010**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **09.11.2009 DE 102009046540**

(71) Anmelder: **Evonik Degussa GmbH**
**45128 Essen (DE)**

(72) Erfinder:
- **Schachtely, Uwe**
  **63796, Kahl am Main (DE)**
- **Kuhn, Dieter**
  **63517, Rodenbach (DE)**
- **Kinzlinger, Uwe**
  **63741, Aschaffenburg (DE)**
- **Schmidt, Gerold**
  **63517, Rodenbach (DE)**
- **Scharf, Guido**
  **63594, Hasselroth (DE)**
- **Röder, Jörg**
  **36381, Schlüchtern (DE)**
- **Welker, Thomas**
  **63454, Hanau (DE)**

(54) **Thermoplastische Elastomermischungen**

(57) Thermoplastische Elastomermischung, die mindestens ein thermoplastisches Elastomer TPE, ausgenommen ein thermoplastisches Polyurethan TPU, und mindestens ein Füllstoff aus der Gruppe gefällte Kieselsäure, gefälltes Silikat oder Ruß enthält.

Die thermoplastischen Elastomermischungen werden hergestellt, in dem man in einem ersten Schritt mindestens einen Füllstoff, ausgewählt aus der Gruppe gefällte Kieselsäure, gefälltes Silikat oder Ruß, und mindestens ein Thermoplast zu einem Masterbatch mischt und in einem zweiten Schritt den Masterbatch mit mindestens einem thermoplastischen Elastomer, ausgenommen ein thermoplastisches Polyurethan TPU, mischt.

Die thermoplastische Elastomermischung kann in Spritzgußartikel eingesetzt werden.

EP 2 325 249 A1

## Beschreibung

Thermoplastische Elastomere (Kurzzeichen TPE) sind Kunststoffe, die sich bei Raumtemperatur vergleichbar den klassischen Elastomeren verhalten, sich jedoch unter Wärmezufuhr plastisch verformen lassen, und somit ein thermoplastisches Verhalten zeigen.

Üblicherweise sind Elastomere chemisch weitmaschig vernetzte Raumnetzmoleküle. Die Vernetzungen können ohne Zersetzung des Materials nicht gelöst werden.

Thermoplastische Elastomere haben in Teilbereichen physikalische Vernetzungspunkte (Nebenvalenzkräfte oder Kristallite), die sich bei Wärme auflösen, ohne dass sich die Makromoleküle zersetzen. Daher lassen sie sich wesentlich besser verarbeiten als normale Elastomere. So können auch Kunststoffabfälle wieder eingeschmolzen und weiter verarbeitet werden.

Aus EP 1736505 sind thermoplastische Matrix/Verbindungen bekannt, enthaltend 40 bis 99,9 Gew.-% thermoplastisches Polymer und 0,1 bis 60 Gew.-% silanisiertes, strukturmodifiziertes, pyrogen erzeugte Kieselsäure.

Ferner ist aus EP 08166704.0 ein Prozesshilfsmittel, enthaltend

a) 10 - 50 Gew.-% hydrophobierte, wenigstens teilweise aggregierte Metalloxidpartikel, ausgewählt aus der Gruppe bestehend aus Aluminiumoxid, Siliciumdioxid und Mischungen der vorgenannten Metalloxide,

b) 20 - 75 Gew.-% ein oder mehrerer thermoplastischer Polyurethane,

c) 0,5 - 25 Gew.-% ein oder mehrere Isocyanate,

d) 0,5 - 15 Gew.-% ein oder mehrere als Gleit- und Dispergierhilfsmittel wirkende Verbindungen,

wobei die Summe der Bestandteile a) bis d) wenigstens 90 Gew.-%, bezogen auf das Prozesshilfsmittel, beträgt, bekannt.

Aus PCT/EP2009/053404 sind thermoplastische Elastomere bekannt, enthaltend pyrogene Kieselsäure.

Ferner sind aus EP 1655331 hochfeste thermoplastische Vulkanisate bekannt, umfassend eine dispergierende Kautschukkomponente, eine polyolefinische thermoplastische Harzkomponente und ein Propylen-Copolymer.

Aufgrund der durch den kunststoffähnlichen Verarbeitungsprozess sehr kurzen Zykluszeiten in der Verarbeitung werden thermoplastische Elastomere vermehrt in klassischen Gummianwendungen, zum Beispiel Fensterdichtungen im Automobilbereich, eingesetzt.

Weitere Einsatzgebiete von thermoplastischen Elastomeren sind beispielsweise Airbagabdeckungen, bewegliche Kabelschläuche, Dichtungen etc.

Derartige thermoplastische Elastomermischungen können bei der Herstellung von Spritzgußartikeln den Nachteil einer hohen Orientierung aufweisen. Dies führt zu einer Anisotropie, wobei die mechanischen Eigenschaften in Querrichtung (das heißt quer zur Fließrichtung) beziehungsweise Längsrichtung (das heißt längs zur Fließrichtung) sehr unterschiedlich sein können.

Es bestand somit die Aufgabe, thermoplastische Elastomermischungen herzustellen, die isotrope mechanische Eigenschaften aufweisen. Sie sollen sowohl in der Längsrichtung als auch in der Querrichtung dieselben oder nahezu dieselben mechanischen Eigenschaften, beispielsweise Zugfestigkeit oder Bruchdehnung, aufweisen. Zusätzlich sollte die Fließfähigkeit gegenüber vergleichbaren Mischungen aus dem Stand der Technik, gleich oder besser sein.

Gegenstand der Erfindung ist eine thermoplastische Elastomermischung, welche dadurch gekennzeichnet ist, dass diese mindestens ein thermoplastisches Elastomer TPE, ausgenommen ein thermoplastisches Polyurethan TPU, und mindestens einen Füllstoff aus der Gruppe gefällte Kieselsäure, gefälltes Silikat oder Ruß enthält.

Die erfindungsgemäße thermoplastische Elastomermischung kann mindestens einen Thermoplast enthalten.

Die erfindungsgemäße thermoplastische Elastomermischung kann mindestens eine pyrogene Kieselsäure enthalten.

Als Ruß kann Furnaceruß, Gasruß, Channelruß, Flammruß, Thermalruß, Acetylenruß, Plasmaruß, Inversionsruß, bekannt aus DE 195 21 565, Si-haltige Ruße, bekannt aus WO 98/45361 oder DE 196 13 796, oder metallhaltige Ruße, bekannt aus WO 98/42778, Lichtbogenruß und Ruße, die Nebenprodukte chemischer Produktionsprozesse sind, eingesetzt werden.

Der Ruß kann durch vorgelagerte Reaktionen aktiviert werden. Der Ruß kann ein nichtoxidierter Ruß sein. Der Ruß kann ein oxidierter Ruß sein.

Es können Ruße, die als Verstärkerfüllstoff in Kautschukmischungen verwendet werden, eingesetzt werden. Es können Farbruße eingesetzt werden. Weitere Ruße können sein: Leitfähigkeitsruß, Ruß zur UV-Stabilisierung, Ruß als Füllstoff in anderen Systemen als Kautschuk, wie zum Beispiel in Bitumen oder Kunststoff, oder Ruß als Reduktionsmittel in der Metallurgie.

Der Ruß kann einen DBP-Wert (ASTM D 2414) zwischen 30 und 425 ml/100g, bevorzugt zwischen 35 und

250 ml/100g, besonders bevorzugt zwischen 40 und 150 ml/100g, ganz besonders bevorzugt zwischen 45 und 110 ml/100g, haben.

Der Ruß kann eine BET-Oberfläche (ASTM D 4820) zwischen 20 und 1200 $m^2/g$, bevorzugt zwischen 22 und 600 $m^2/g$, besonders bevorzugt zwischen 29 und 300 $m^2/g$, ganz besonders bevorzugt zwischen 30 und 150 $m^2/g$, haben.

Der Ruß kann einen pH-Wert (ASTM D 1512) von 2 bis 11, vorzugsweise 4 bis 10, besonders bevorzugt 5 bis 9, haben.

Als Ruß kann beispielsweise PRINTEX® Alpha, PRINTEX® 80, PRINTEX® 85, PRINTEX® 55, PRINTEX® 45, PRINTEX® 40, PRINTEX® P, PRINTEX® 60, PRINTEX® L, PRINTEX® 300, PRINTEX® 30, PRINTEX® 3, PRINTEX® 35, PRINTEX® 25, PRINTEX® 200, PRINTEX® A, PRINTEX® G, Flammruß 101, Spezialschwarz 550, Spezialschwarz 350, Spezialschwarz 250, Spezialschwarz 100, Farbruß FW 200, Farbruß FW 2, Farbruß FW 1, Farbruß FW 18, Farbruß S 170, Farbruß S 160, PRINTEX® 150 T, PRINTEX® U, PRINTEX® V, Spezialschwarz 6, Spezialschwarz 5 oder Spezialschwarz 4 der Firma Evonik Degussa GmbH eingesetzt werden.

Die gefällte Kieselsäure kann durch Fällung aus Alkalisilikatlösung mit Säure hergestellt werden. Das gefällte Silikat kann durch Fällung aus Alkalisilikatlösung mit Metallsalzlösungen, beispielsweise Calciumchlorid oder Aluminiumsulfat, hergestellt werden.

Das gefällte Silikat kann vorzugsweise ein Calciumsilikat oder Aluminiumsilikat sein.

Die gefällte Kieselsäure oder das gefällte Silikat kann einen DBP-Wert (DIN 53601) zwischen 30 und 400 g/100g, bevorzugt zwischen 35 und 250 g/100g, besonders bevorzugt zwischen 50 und 200 g/100g, ganz besonders bevorzugt zwischen 80 und 190 g/100g, haben.

Die gefällte Kieselsäure oder das gefällte Silikat kann eine BET-Oberfläche (ISO 5794-1) zwischen 15 und 800 $m^2/g$, bevorzugt zwischen 22 und 600 $m^2/g$, besonders bevorzugt zwischen 29 und 300 $m^2/g$, ganz besonders bevorzugt zwischen 30 und 120 $m^2/g$, haben.

Die gefällte Kieselsäure oder das gefällte Silikat kann einen pH-Wert (ISO 787-9) von 4 bis 12, vorzugsweise 5 bis 11,5, besonders bevorzugt 6 bis 11, haben.

Als gefällte Kieselsäure kann beispielsweise Ultrasil® VN 2, Ultrasil® VN 3, Ultrasil® 3370, Ultrasil® 7000, Ultrasil® 360, SIPERNAT® 325C oder SIPERNAT® D17 der Firma Evonik Degussa GmbH eingesetzt werden.

Als gefälltes Silikat kann beispielsweise Sipernat® 820 A, Sipernat® 880, Ultrasil® AS 7 oder Ultrasil® 880 der Firma Evonik Degussa GmbH eingesetzt werden.

Die gefällte Kieselsäure oder das gefällte Silikat kann mittels eines Oberflächenmodifizierungsmittels beziehungsweise mittels eines Silans hydrophobiert sein.

Als Oberflächenmodifizierungsmittel beziehungsweise als Silan können folgende Verbindungen eingesetzt werden:

a) Organosilane der Formel $(RO)_3Si(C_nH_{2n+1})$oder
$(RO)_3Si(C_nH_{2n-1})$ mit
R = Alkyl, wie zum Beispiel Methyl-, Ethyl-, n-Propyl-, i-Propyl- oder Butyl-,
n = 1 - 20,

b) Organosilane der Formel $R^1_x(RO)_ySi(C_nH_{2n+1})$ oder $R^1_x(RO)_ySi(C_nH_{2n-1})$ mit
R = Alkyl, wie zum Beispiel Methyl-, Ethyl-, n-Propyl-, i-Propyl- oder Butyl-,
$R^1$ = Alkyl, wie zum Beispiel Methyl-, Ethyl-, n-Propyl-, i-Propyl- oder Butyl-, Cycloalkyl,
n - 1 - 20, x+y = 3,
x = 1 oder 2,
y = 1 oder 2,

c) Halogenorganosilane der Formel $X_3Si(C_nH_{2n+1})$ oder $X_3Si(C_nH_{2n-1})$ mit
X = Cl oder Br,
n = 1 - 20,

d) Halogenorganosilane der Formel $X_2(R^1)Si(C_nH_{2n+1})$ oder $X_2(R^1)Si(C_nH_{2n-1})$ mit
X = Cl oder Br,
$R^1$ = Alkyl, wie zum Beispiel Methyl-, Ethyl-,
n-Propyl-, i-Propyl- oder Butyl-,
Cycloalkyl,
n - 1 - 20,

e) Halogenorganosilane der Formel $X(R^1)_2Si(C_nH_{2n+1})$ oder
$X(R^1)_2Si(C_nH_{2n-1})$ mit

X = Cl oder Br,
$R^1$ = Alkyl, wie zum Beispiel Methyl-, Ethyl-, n-Propyl-, i-Propyl- oder Butyl-, Cycloalkyl,
n = 1 - 20,

f) Organosilane der Formel $(RO)_3Si(CH_2)_m$-$R^2$ mit
R = Alkyl, wie zum Beispiel Methyl-, Ethyl-, n-Propyl-, i-Propyl- oder Butyl-,
m = 0, 1 - 20,
$R^2$ = Methyl-, Aryl (zum Beispiel -$C_6H_5$, substituierte Phenylreste),
-$C_4F_9$, $OCF_2$-CHF-$CF_3$, -$C_6F_{13}$, -O-$CF_2$-$CHF_2$,
-$NH_2$, -$N_3$, -SCN, -CH=$CH_2$, -NH-$CH_2$-$CH_2$-$NH_2$,
-N ($CH_2$-$CH_2$-$NH_2$) 2,
-OOC($CH_3$)C = $CH_2$,
-$OCH_2$-CH(O)$CH_2$,

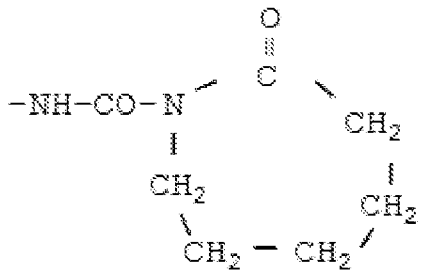
,

-NH-COO-$CH_3$, -NH-COO-$CH_2$-$CH_3$, -NH-$(CH_2)_3Si(OR)_3$,
-$S_{x'}$-$(CH_2)_3Si(OR)_3$ mit x'= 1 bis 8
-SH,
-NX'X"X"' mit X' = Alkyl oder Aryl, X" - H, Alkyl oder Aryl, X"' = H, Alkyl, Aryl, Benzyl oder $C_2H_4NR^3R^4$ mit $R^3$ = H oder Alkyl und $R^4$ = H oder Alkyl,

g) Organosilane der Formel $(R^5)_{x''}$ $(RO)_{y''}$ Si $(CH_2)_m$-$R^6$ mit x'' = 0, 1 oder 2,
y'' = 1, 2 oder 3, x'' + y'' = 3,
$R^5$ = Alkyl oder Cycloalkyl,
m - 0, 1 - 20,
$R^6$ = Methyl-, Aryl (zum Beispiel -$C_6H_5$ substituierte Phenylreste),
-$C_4F_9$, -$OCF_2$-CHF-$CF_3$, -$C_6F_{13}$, -O-$CF_2$-$CHF_2$,
-$NH_2$, -$N_3$, -SCN, -CH=$CH_2$, -NH-$CH_2$-$CH_2$-$NH_2$,
-N $(CH_2$-$CH_2$-$NH_2)_2$,
-OOC($CH_3$)C = $CH_2$,
-$OCH_2$-CH(O)$CH_2$,

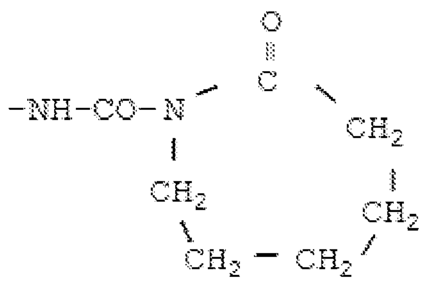
,

-NH-COO-$CH_3$, -NH-COO-$CH_2$-$CH_3$, -NH-$(CH_2)_3Si(OR)_3$, $S_{x'}$- $(CH_2)_3$Si $(OR)_3$, mit x'= 1 bis 8

-SH,
-NX'X"R'" (X' = Alkyl oder Aryl, X" = H, Alkyl oder Aryl, X'" = H, Alkyl, Aryl, Benzyl oder $C_2H_4N$ $R^3R^4$ mit $R^3$ = H oder Alkyl und $R^4$ = H oder Alkyl,

h) Halogenorganosilane der Formel $X_3Si(CH_2)_m$-$R^7$ mit
X = Cl oder Br,
m = 0, 1 - 20,
$R^7$ = Methyl-, Aryl (zum Beispiel -$C_6H_5$, substituierte Phenylreste),
-$C_4F_9$, -$OCF_2$-CHF-$CF_3$, -$C_6F_{13}$, -O-$CF_2$-$CHF_2$,
-$NH_2$, -$N_3$, -SCN, -CH=$CH_2$,
-NH-$CH_2$-$CH_2$-$NH_2$,
-N ($CH_2$-$CH_2$-$NH_2$)$_2$,
-OOC($CH_3$)C=$CH_2$,
-$OCH_2$-CH(O)$CH_2$,

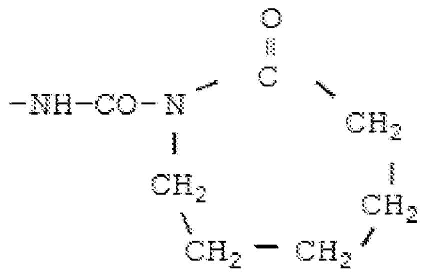
,

-NH-COO-$CH_3$, -NH-COO-$CH_2$-$CH_3$, -NH-$(CH_2)_3Si(OR)_3$,
-$S_{x'}$-$(CH_2)_3Si(OR)_3$, mit x'= 1 bis 8,
-SH,

i) Halogenorganosilane der Formel (R)$X_2Si(CH_2)_m$-$R^8$ mit X = Cl oder Br
R = Alkyl, wie zum Beispiel Methyl-, Ethyl-, n-Propyl-, i-Propyl- oder Butyl-,
m = 0, 1 - 20
$R^8$ = Methyl-, Aryl (z.B. -$C_6H_5$, substituierte Phenylreste),
-$C_4F_9$, -$OCF_2$-CHF-$CF_3$, -$C_6F_{13}$, -O-$CF_2$-$CHF_2$,
-$NH_2$, -$N_3$, -SCN, -CH=$CH_2$, -NH-$CH_2$-$CH_2$-$NH_2$,
-N ($CH_2$-$CH_2$-$NH_2$)$_2$,
-OOC( $CH_3$)C= $CH_2$,
-$OCH_2$-CH(O)$CH_2$

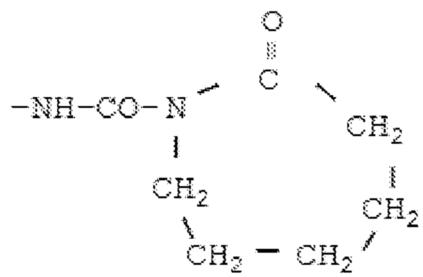
,

-NH-COO-$CH_3$, -NH-COO-$CH_2$-$CH_3$, -NH-$(CH_2)_3Si(OR^9)_3$, wobei $R^9$ = Methyl-, Ethyl-, Propyl-, Butyl- sein kann,
-$S_{x'}$-$(CH_2)_3Si(OR^9)_3$, wobei x'= 1 bis 8, $R^9$ = Methyl-, Ethyl-, Propyl-, Butyl- sein kann,
-SH,

j) Halogenorganosilane der Formel $(R)_2X\ Si(CH_2)_m-R^{10}$ mit X = Cl oder Br,
R = Alkyl, wie zum Beispiel Methyl-, Ethyl-, n-Propyl-, i-Propyl- oder Butyl-,
m = 0, 1 - 20
$R^{10}$ = Methyl-, Aryl (z.B. $-C_6H_5$, substituierte Phenylreste),
$-C_4F_9$, $-OCF_2-CHF-CF_3$, $-C_6F_{13}$, $-O-CF_2-CHF_2$,
$-NH_2$, $-N_3$, -SCN, $-CH=CH_2$, $-NH-CH_2-CH_2-NH_2$,
$-N(CH_2-CH_2-NH_2)_2$,
$-OOC(CH_3)C=CH_2$,
$-OCH_2-CH(O)CH_2$,

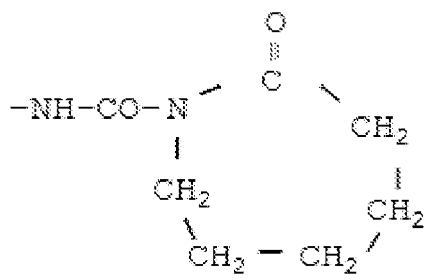
,

$-NH-COO-CH_3$, $-NH-COO-CH_2-CH_3$, $-NH-(CH_2)_3Si(OR)_3$,
$-S_{x'}-(CH_2)_3Si(OR)_3$, mit x'= 1 bis 8,
-SH,

k) Silazane des Types 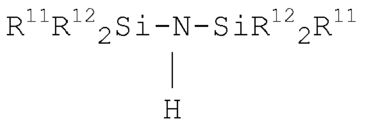 mit H

$R^{11}$ = Alkyl, Vinyl oder Aryl,
$R^{12}$ = Alkyl, Vinyl oder Aryl,

l) Cyclische Polysiloxane des Types D 3, D 4, D 5, wobei unter D 3, D 4 und D 5 cyclische Polysiloxane mit 3, 4 oder 5 Einheiten des Typs $-O-Si(CH_3)$ verstanden wird, z.B. Octamethylcyclotetrasiloxan = D 4

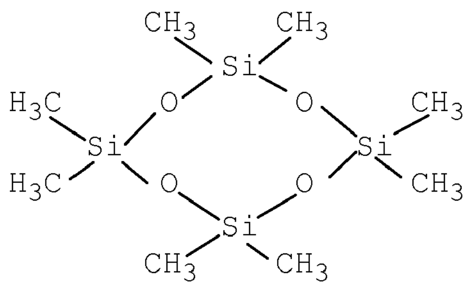

m) Polysiloxane beziehungsweise Silikonöle der Formel

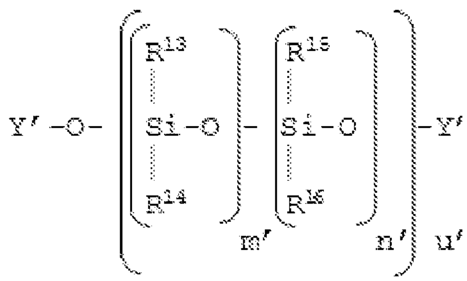

Y' =$CH_3$, H, $CnH_{2n+1}$,$Si(CH_3)_3$, $Si(CH_3)_2H$, $Si(CH_3)_2OH$,
$Si(CH_3)_2(OCH_3)$, $Si(CH_3)_2(C_nH_{2n+1})$ mit n = 1-20,
$R^{13}$ = Alkyl, wie $C_nH_{2n+1}$, wobei n = 1 bis 20 ist, Aryl, wie Phenyl- und substituierte Phenylreste, $(CH_2)_n$-$NH_2$ oder H,
$R^{14}$ = Alkyl, wie $C_nH_{2n+1}$, wobei n = 1 bis 20 ist, Aryl, wie Phenyl- und substituierte Phenylreste, $(CH_2)_n$-$NH_2$ oder H,
$R^{15}$ = Alkyl, wie $C_nH_{2n+1}$, wobei n = 1 bis 20 ist, Aryl, wie Phenyl- und substituierte Phenylreste, $(CH_2)_n$-$NH_2$ oder H,
$R^{16}$ = Alkyl, wie $C_nH_{2n+1}$, wobei n = 1 bis 20 ist, Aryl, wie Phenyl- und substituierte Phenylreste, $(CH_2)_n$-$NH_2$ oder H,
mit m' = 0, 1 - 1000000,
n' = 0, 1 - 1000000,
u' = 0, 1 - 1000000.

Die gefällte Kieselsäure oder das gefällte Silikat kann eine gefällte Kieselsäure oder ein gefälltes Silikat sein, das mit Dimethyldichlorsilan oder Polydimethylsiloxan hydrophobiert ist.

Der Ruß, die gefällte Kieselsäure oder das gefällte Silikat kann pulverförmig, granulatförmig oder geperlt sein.

In einer bevorzugten Variante der erfindungsgemäßen thermoplastischen Elastomermischung kann der Füllstoff ein gefälltes Silikat, vorzugsweise gefälltes Calciumsilikat, der Thermoplast ein Polypropylen und das thermoplastische Elastomer ein Styrolblockcopolymer sein.

Die erfindungsgemäße thermoplastische Elastomermischung kann weiterhin eine Ölkomponente und weitere Komponenten, wie zum Beispiel Additive, enthalten.

Nach dem inneren Aufbau von thermoplastischen Elastomeren unterscheidet man Blockcopolymere und Elastomerlegierungen.

Blockcopolymere besitzen innerhalb eines Moleküls Hart- und Weichsegmente. Das Blockcopolymer besteht also aus einer Molekülsorte, in der beide Eigenschaften verteilt sind (zum Beispiel SBS, SIS, SEBS oder SEEPS).

Elastomerlegierungen sind Polymerblends, also Zusammenmischungen (Gemenge) von fertigen Polymeren. Die Elastomerlegierung besteht also aus mehreren Molekülsorten. Durch unterschiedliche Mischungsverhältnisse und Zuschlagmittel erhält man maßgeschneiderte Werkstoffe, beispielsweise Polyolefin-Elastomer aus Polypropylen (PP) und Naturgummi (NR). Je nach Mengenverhältnis decken sie einen weiten Härtebereich ab.

Bei den thermoplastischen Elastomeren unterscheidet man folgende Gruppen:

- TPE-O oder TPO = Thermoplastische Elastomere auf Olefinbasis, vorwiegend PP/EPDM, zum Beispiel Santoprene (AES/Monsanto). Ein thermoplastisches Elastomer, welches eine physikalische Mischung aus einem Elastomer und einem Thermoplast ist. Das Elastomer kann ein EPDM (Ethylen-Propylen-Dien-Kautschuk), EPM (Ethylen-Propylen-Kautschuk), IIR (Isopren-Isobutylen-Rubber), EVA (Ethylvinylacetat), NR (Natural-Rubber) sowie ein Gemisch daraus sein.

- TPE-V oder TPV = Vernetzte thermoplastische Elastomere auf Olefinbasis, beispielsweise PP/EPDM, zum Beispiel Sarlink (DSM). TPV ist wie TPO ebenfalls eine thermoplastische Elastomermischung, die aus einer physikalischen Mischung aus einem Elastomer und einem Thermoplast besteht. Das Elastomer kann ein EPDM (Ethylen-Propylen-Dien-Kautschuk), EPM (Ethylen-Propylen-Kautschuk), IIR (Isopren-Isobutylen-Rubber), EVA (Ethylvinylacetat), NR (Natural-Rubber) sowie ein Gemisch daraus sein. Beim TPV wird das Elastomer beim Mischungsprozess zusätzlich dynamisch vernetzt. Typischerweise wird ein TPV durch kontinuierliche Vernetzung beim Vermischen der Elastomerphase mit der Thermoplastphase hergestellt. Dabei wird das Elastomer mit Hilfe eines Vernetzers und/oder eines Katalysators während des Mischprozesses vernetzt. Da die vernetzte Elastomerphase des TPV unlöslich und nicht mehr fließfähig bei höheren Temperaturen ist, besitzen TPV's generell eine verbesserte Ölbeständigkeit und Lösemittelbeständigkeit, sowie einen niedrigeren Druckverformungsrest im Vergleich zu einfachen Mischungen.

- TPE-U oder TPU = Thermoplastische Elastomere auf Urethanbasis, zum Beispiel Desmopan (Bayer).

- TPE-E oder TPC = Thermoplastische Copolyester, zum Beispiel Hytrel (DuPont).

- TPE-S oder TPS = Styrol-Blockcopolymere wie SEPS (Styrol-Ethylen-Propylen-Styrol), SEEPS (Styrol-Ethylen-Ethylen-Propylen-Styrol) und MBS, SEBS (Styrol-Ethylen-Butylen_Styrol), SIS (Styrol-Isopren-Styrol), SBS (Styrol_ Butadien_Styrol), zum Beispiel Septon (Kuraray).

- TPE-A oder TPA = Thermoplastische Copolyamide, zum Beispiel PEBA (Polyetherblockamid), VESTAMID der Firma Evonik).

Das in der erfindungsgemäßen thermoplastischen Elastomermischung eingesetzte thermoplastische Elastomer kann ein TPE-O, TPE-V, TPE-E, TPE-S oder TPE-A sein.

Die erfindungsgemäße thermoplastische Elastomermischung kann zusätzlich eine Ölkomponente, einen Thermoplast und ein Styrolblockcopolymerisat enthalten.

Die Ölkomponente kann sein: paraffinische Öle (Weißöle), naphtenische Öle, aromatische Gemische der genannten Öle (Charakterisierung durch Anteil an Paraffinen, Naphtenen, Aromaten, Viskosität). Der Viskositätsbereich kann niedrig bis hochviskos, zum Beispiel 1 - 1 300 $mm^2/s$ bei 40 °C, sein.

Das Thermoplast kann jedes Material sein, das kein "Kautschuk" ist und das ein Polymer oder Polymerblend ist, das von dem Fachmann als von thermoplastischer Art angesehen wird, zum Beispiel ein Polymer, das erweicht, wenn es Wärme ausgesetzt wird, und zu seinem ursprünglichen Zustand zurückkehrt, wenn es auf Raumtemperatur abgekühlt wird. Das Thermoplast kann ein oder mehrere Polyolefine enthalten, einschließlich Polyolefin-Homopolymere und Polyolefin-Copolymere. Außer als ansonsten angegeben ist, bedeutet der Ausdruck "Copolymer" ein Polymer, das von zwei oder mehr Monomeren (einschließlich Terpolymere, Tetrapolymere usw.) abgeleitet ist, und der Ausdruck "Polymer" bezieht sich auf jede kohlenstoffhaltige Verbindung, die Repetiereinheiten eines oder mehrerer unterschiedlicher Monomere aufweist.

Beispielhafte Polyolefine können aus Monoolefin-Monomeren hergestellt werden, die unter anderem die folgenden einschließen: Monomere mit 2 bis 7 Kohlenstoffatomen, wie Ethylen, Propylen, 1-Buten, Isobutylen, 1-Penten, 1-Hexen, 1-Octen, 3-Methyl-1-penten, 4-Methyl-1-penten, 5-Methyl-1-hexen, Mischungen derselben und Copolymere derselben mit (Meth)acrylaten und/oder Vinylacetaten. Vorzugsweise ist das Thermoplast nicht vulkanisiert oder nicht vernetzt.

In einer Ausführungsform kann der Thermoplast Polypropylen enthalten. Der Ausdruck "Polypropylen", wie er hierin verwendet wird, bedeutet im breiten Sinn jedes Polymer, das durch den Fachmann als ein "Polypropylen" angesehen wird (wie in wenigstens einem Patent oder einer Veröffentlichung wiedergegeben wird) und schließt Homopolymere, schlagzähe Polymere und statistische Polymere von Propylen ein. Vorzugsweise kann das in den hierin beschriebenen Zusammensetzungen verwendete Polypropylen einen Schmelzpunkt von höher als 110 °C haben, schließt wenigstens 90 Gew.-% Propyleneinheiten ein und enthält isotaktische Sequenzen solcher Einheiten. Das Polypropylen kann auch ataktische Sequenzen oder syndiotaktische Sequenzen oder beide enthalten. Das Polypropylen kann auch im wesentlichen syndiotaktische Sequenzen enthalten, so dass der Schmelzpunkt des Polypropylens höher als 110 °C ist. Das Polypropylen kann entweder ausschließlich von Propylen-Monomeren (d.h. solche, die nur Propylen-Einheiten aufweisen) abgeleitet sein oder hauptsächlich von Propylen (mehr als 80 % Propylen) abgeleitet sein, wobei der Rest sich von Olefinen ableitet, insbesondere Ethylen und/oder $C_4$-$C_{10}$-$\alpha$-Olefinen. Die Polypropylene können MFI-Werte von niedrigen (10, 15 oder 20 g / 10 min) bis zu hohen (25 bis 30 g / 10 min) haben. Andere Polypropylene können einen niedrigeren MFI, zum Beispiel "partielle" Polypropylene, die einen MFI von weniger als 1,0 aufweisen, haben. Polypropylene mit einem hohen MFI können wegen der leichten Verarbeitung oder des leichten Compoundierens bevorzugt werden.

In einer oder mehreren Ausführungsformen kann der Thermoplast ein isotaktisches Polypropylen sein. Der Thermoplast kann ein oder mehrere kristalline Propylen-Homopolymere oder Propylen-Copolymere mit einer Schmelztemperatur von mehr als 105 °C, gemessen mit DSC, enthalten. Bevorzugte Propylen-Copolymere umfassen, ohne aber auf dieselben beschränkt zu sein, Propylen-Homopolymere oder Propylen-Terpolymere, schlagzähe Propylen-Copolymere, statisches Polypropylen und Mischungen derselben. Bevorzugte Comonomere haben 2 Kohlenstoffatome oder 4 bis 12 Kohlenstoffatome. Vorzugsweise ist das Comonomer Ethylen.

Solche Thermoplaste und Verfahren zur Herstellung derselben werden im US-Patent 6,342,565 beschrieben.

Der Ausdruck "statistisches Polypropylen", wie er hierin verwendet wird, bedeutet allgemein ein Einphasen-Propylencopolymer mit bis zu 9 Gew.-%, vorzugsweise 2 Gew.-% bis 8 Gew.-%, eines $\alpha$-Olefin-Comonomers. Bevorzugte $\alpha$-Olefin-Comonomere können 2 Kohlenstoffatome oder 4 bis 12 Kohlenstoffatome haben. Vorzugsweise kann das $\alpha$-Olefin-Comonomer Ethylen sein.

Besonders bevorzugt eingesetzte Thermoplaste können Polyolefine, wie beispielsweise Polypropylen, Polyurethan, Polyethylen, Polyethylen hoher Dichte oder Polyethylen niedriger Dichte, Polyamide, wie beispielsweise Nylon-6 und Nylon-6,6, Polyvinylchlorid (PVC), PET sowie Mischungen und Copolymere aus den genannten Polymeren sein.

Weitere Thermoplaste können sein:

ABS (Acrylnitril-Butadien-Styrol), ASA (Acrylester-Styrol-Acrylnitril), EP (Ethylen-Propylen), ETFE (Ethylen-Tetrafluorethylen), EVA (Ethylenvinylacetat), EVOH (Ethylenvinylalkohol), FEP (Tetrafluorethylen-Hexafluorpropylen Ionomer), MABS (Methylmethacrylat-Acrylnitril-Butadien-Styrol), MBS (Methacrylat-Butadien-Styrol), PA (Polyamid), PA 6 (Polyamid 6), PA 11 (Polyamid 11), PA 12 (Polyamid 12), PA 66 (Polyamid 66), PA 610 (Polyamid 610), PA 612 (Polyamid 612), PB (Polybutylen), PBT (Polybutylenterephthalat), PC (Polycarbonat), PCTFE (Polychlor-Trifluorethylen), PE (Polyethylen), HDPE (Polyethylen hoher Dichte), HMW-HDPE (Polyethylen hoher Dichte mit hohem Molekulargewicht), UHMW-HDPE (Polyethylen hoher Dichte mit sehr hohem Molekulargewicht), LDPE (Polyethylen niedriger Dichte), LLDPE (Lineares Polyethylen niedriger Dichte), VLDPE (Polyethylen sehr niedriger Dichte),

MDPE (Polyethylen mittlerer Dichte), PE-C (Chloriertes Polyethylen), PET (Polyethylenterephthalat), PFA (Perfluoralkoxyalkan), PIB (Polyisobutylen), PMMA (Polymethylmethacrylat), PMMI (Polymethacrylmethylimid),

POM (Polyoxymethylen), PP (Polypropylen), PP-B (Polypropylen-Blockpolymerisat), PP-H (Polypropylen-Homopolymer), PP-R (Polypropylen-Random Copolymerisat), PPE (Polyphenylenether), PS (Polystyrol), EPS (Expandiertes Polystyrol), HIPS (schlagfestes Polystyrol), PTFE (Polytetrafluorethylen), PVAC (Polyvinylacetat), PVAL (Polyvinylalkohol), PVC (Polyvinylchlorid), PVC-C (chloriertes Polyvinylchlorid), PVDC

(Polyvinylidenchlorid), PVDF (Polyvinylidenfluorid), SAN (Styrol-Acrylnitril), SB (Styrolbutadien) oder SMAH (Styrol-Maleinsäureanhydrid).

Einsetzbare Styrolblockcopolymerisate können sein: Blockcopolymerisate aus Styrol/konjungiertes Dien/Styrol, wobei des konjungierte Dien ganz oder teilweise hydriert sein kann sowie Mischungen daraus. Diese Blockcopolymere können 10 bis 50 Gew.-%, bevorzugt 25 bis 35 Gew.-% Styrol und 90 bis 50 Gew.-%, bevorzugt 75 bis 35 Gew.-%, konjungiertes Dien enthalten. Das konjungierte Dien kann aus Butadien, Isopren oder Mischungen daraus bestehen.

Die erfindungsgemäße thermoplastische Elastomermischung kann Additive enthalten. Additive können zusätzliche Füllstoffe oder Zusatzstoffe, zum Beispiel zur Wasseradsorption, Flammschutzmittel, Hydrolyseschutzmittel, Antioxidantien, Stabilisatoren, Farbmittel und interne Trennmittel, sein.

Unter Additiven als zusätzliche Füllstoffe sind insbesondere verstärkend wirkende Füllstoffe wie die an sich bekannten, üblichen organischen und anorganischen Füllstoffe, Verstärkungsmittel usw. zu verstehen. Im einzelnen seien beispielhaft genannt: anorganische Füllstoffe, wie silikatische Mineralien, beispielsweise Quarzmehle, Schichtsilikate wie Antigorit, Serpentin, Hornblenden, Amphibole, Chrisotil und Talkum, Metalloxide wie Kaolin, Aluminiumoxide, Titanoxide und Eisenoxide, Metallsalze wie Kreide, Schwerspat und anorganische Pigmente wie Cadmiumsulfat, Zinksulfid sowie Glas und andere, wie beispielsweise in Pigment + Füllstoff Tabellen, Olaf Lueckert, Verlag O. Lueckert, 1994, Seite 506 bis 612, beschrieben. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Als Zusatzstoffe wie Flammschutzmittel können im allgemeinen die aus dem Stand der Technik bekannten Flammschutzmittel verwendet werden. Geeignete Flammschutzmittel sind beispielsweise bromierte Ether (Ixol B 251), bromierte Alkohole wie Dibromneopentylalkohol, Tribromneopenthylalkohol und PHT-4-Diol sowie chlorierte Phosphate, wie zum Beispiel, Tris-(2-chlorethyl)phosphat, Tris-(2-chlorisopropyl)phosphat (TCPP), Tris-(1,3-dichlorisopropyl)phosphat, Tris-(2.3-dibrompropyl)phosphat und Tetrakis-(2-chlorethyl)-ethylendiphosphat, oder Mischungen daraus.

Außer den bereits genannten halogensubstituierten Phosphaten können auch anorganische Flammschutzmittel wie roter Phosphor, roten Phosphor enthaltenden Zurichtungen, expandierbarer Graphit (Blähgraphit), Aluminiumoxidhydrat, Magnesiumhydroxid, Antimontrioxid, Arsenoxid, Ammoniumpolyphosphat und Calciumsulfat oder Cyanursäurederivate wie Melamin oder Mischungen aus mindestens zwei Flammschutzmitteln, wie Ammoniumpolyphosphaten und Melamin sowie gegebenenfalls Stärke zum Flammfestmachen der erfindungsgemäß hergestellten thermoplastischen Elastomermischung verwendet werden.

Als weitere flüssige halogenfreie Flammschutzmittel können Diethylethanphosphonat (DEEP), Triethylphosphat (TEP), Dimethylpropylphosphonat (DMPP), Diphenylkresylphosphat (DPK) und andere verwendet werden.

Die erfindungsgemäße thermoplastische Elastomermischung kann 0,5 bis 40 Gew.-%, bevorzugt 2 bis 25 Gew.-%, besonders bevorzugt 4 - 15 Gew.-%, an Füllstoffen, ausgewählt aus der Gruppe gefällte Kieselsäure, gefälltes Silikat oder Ruß, enthalten.

Die erfindungsgemäße thermoplastische Elastomermischung kann 20 bis 80 Gew.-%, bevorzugt 30 bis 70 Gew.-%, an thermoplastischen Elastomer enthalten.

Die erfindungsgemäße thermoplastische Elastomermischung kann 0 bis 85 Gew.-%, bevorzugt 0,5 bis 70 Gew.-%, an Additiven enthalten.

Ein weiterer Gegenstand der Erfindung ist ein Verfahren zur Herstellung der erfindungsgemäßen thermoplastischen Elastomermischung, welches dadurch gekennzeichnet ist, dass man in einem ersten Schritt mindestens einen Füllstoff, ausgewählt aus der Gruppe gefällte Kieselsäure, gefälltes Silikat oder Ruß, und mindestens einen Thermoplast

zu einem Masterbatch mischt und in einem zweiten Schritt den Masterbatch mit mindestens einem thermoplastischen Elastomer, ausgenommen ein thermoplastisches Polyurethan TPU, mischt.

Vorzugsweise kann der Thermoplast ein Polypropylen sein.

Vorzugsweise kann das thermoplastische Elastomer ein TPE-S (Styrol-Blockcopolymer) sein.

In einer bevorzugten Variante des erfindungsgemäßen Verfahrens kann man in einem ersten Schritt mindestens ein gefälltes Silikat, vorzugsweise gefälltes Calciumsilikat, und mindestens ein Polypropylen zu einem Masterbatch mischen und in einem zweiten Schritt den Masterbatch mit mindestens einem Styrolblockcopolymer mischen.

Der Masterbatch kann die Füllstoffe, ausgewählt aus der Gruppe gefällte Kieselsäure, gefälltes Silikat oder Ruß, in einer Menge von 1 bis 60 Gew.-%, bevorzugt 20 - 50 Gew.-%, besonders bevorzugt 25 - 45 Gew.-%, bezogen auf das Gesamtgewicht, enthalten.

Der Masterbatch kann zusätzlich die Ölkomponente und Additive enthalten.

Die Herstellung der erfindungsgemäßen thermoplastischen Elastomermischung sowie des Masterbatches kann auf bekannten Vorrichtungen, wie zum Beispiel einem Extruder, Doppelschneckenextruder, Stiftextruder, Mehrschnekkenextruder, Planetenextruder, Kneter oder Kneter mit Austragsschnecke, erfolgen. Bevorzugt kann ein gleichsinnig drehender, dichtkämmender Doppelschneckenextruder eingesetzt werden.

Zur Herstellung des Masterbatches wird mindestens ein Füllstoff aus der Gruppe gefällte Kieselsäure, gefälltes Silikat oder Ruß in ein Thermoplast, bevorzugt ein Polypropylen, besonders bevorzugt ein Polypropylen Homopolymer eingemischt. Die Zugabe der Füllstoffe, ausgewählt aus der Gruppe gefällte Kieselsäure, gefälltes Silikat oder Ruß, kann an verschiedenen Positionen des Extruders erfolgen. Bevorzugt kann die Zugabe der Füllstoffe nach der Aufschmelzphase des Thermoplasts erfolgen. Der Füllstoff kann zum Beispiel über eine zweiwellige Seitenbeschickung in die Schmelze gefördert werden.

Der Masterbatch kann, zum Beispiel bei Verwendung von kontinuierlichen Mischverfahren, in einem oder mehreren Prozeßschritten hergestellt werden. Bei der Herstellung in mehreren Prozeßschritten kann der mit niedrigerer Füllstoffkonzentration als der Endkonzentration hergestellte Masterbatch in den folgenden Prozeßschritten aufkonzentriert werden.

Die thermoplastische Elastomermischung kann die Füllstoffe, ausgewählt aus der Gruppe gefällte Kieselsäure, gefälltes Silikat oder Ruß, in einer Menge von 0,5 bis 40 Gew.-%, bevorzugt 2 - 25 Gew.-%, besonders bevorzugt 4 - 15 Gew.-%, bezogen auf das Gesamtgewicht, enthalten.

Das thermoplastische Elastomer kann in einem Extruder mit dem Masterbatch gemischt werden. Das thermoplastische Elastomer kann die Ölkomponente enthalten, das heißt das thermoplastische Elastomer kann mit der Ölkomponente vorgemischt sein. Das thermoplastische Elastomer beziehungsweise das mit der Ölkomponente vorgemischte thermoplastische Elastomer kann über die Hauptdosierung einem Extruder zugeführt werden. Der Masterbatch kann ebenfalls über die Hauptdosierung oder vorzugsweise über die Seitendosierung dem Extruder zugeführt werden. Falls der Masterbatch zusammen mit dem thermoplastischen Elastomer beziehungsweise das mit der Ölkomponente vorgemischte thermoplastische Elastomer über die Hauptdosierung dem Extruder zugeführt wird, können diese Komponenten vorgemischt werden.

Der Füllstoff kann zur Verbesserung der Bruchdehnung, insbesondere in der Längsrichtung, verwendet werden. Ein weiterer Gegenstand der Erfindung ist die Verwendung der erfindungsgemäßen thermoplastischen Elastomermischung in Spritzgußartikel.

Ein weiterer Gegenstand der Erfindung ist ein Verfahren zur Verbesserung der isotropen mechanischen Eigenschaften von Spritzgußartikeln, welches dadurch gekennzeichnet ist, dass man in einem ersten Schritt mindestens einen Füllstoff, ausgewählt aus der Gruppe gefällte Kieselsäure, gefälltes Silikat oder Ruß, und mindestens einen Thermoplast, zu einem Masterbatch mischt und in einem zweiten Schritt den Masterbatch mit mindestens einem thermoplastischen Elastomer, ausgenommen ein thermoplastisches Polyurethan TPU, mischt.

Ein weiterer Gegenstand der Erfindung ist ein Spritzgußartikel, enthaltend die erfindungsgemäße thermoplastische Elastomermischung, welcher dadurch gekennzeichnet ist, dass der Anisotropiefaktor verbessert ist gegenüber einem mit gleichem Verfahren und gleicher Zusammensetzung, wobei der Füllstoff eine pyrogene Kieselsäure ist, hergestellten Spritzgußartikel.

Der Anisotropiefaktor ist das Verhältnis aus Bruchdehnung längs der Fließrichtung beim Spritzgießen zur Bruchdehnung quer zur Fließrichtung beim Spritzgießen. Idealerweise ist der Anisotropiefaktor 1,0.

Der erfindungsgemäße Spritzgußartikel kann einen Anisotropiefaktor von 0,88 bis 1,12, vorzugsweise 0,89 bis 1,0, haben.

Der erfindungsgemäße Spritzgußartikel, enthaltend die erfindungsgemäße thermoplatische Elastomermischung, kann einen niedrigeren Druckverformungsrest, gemessen nach DIN 53517 (70°C, 22h, 12mm Prüfkörper), haben als bei dem mit gleichem Verfahren und gleicher Zusammensetzung, wobei der Füllstoff eine pyrogene Kieselsäure ist, hergestellten' Spritzgußartikel. |[Kn1]

Die erfindungsgemäße thermoplastische Elastomermischung kann eine verbesserte Fließfähigkeit haben als bei dem mit gleichem Verfahren und gleicher Zusammensetzung, wobei der Füllstoff eine pyrogene Kieselsäure ist,

hergestellten thermoplastischen Elastomermischung. [Kn2] Zur Messung der Fließfähigkeit wird ein spiralförmiger Probekörper spritzgegossen. Als Maß für die Fließfähigkeit dient dabei die Länge der gegossenen Spirale.

Die erfindungsgemäßen thermoplastischen Elastomermischungen weisen verbesserte thermische und mechanische Eigenschaften auf.

Der erfindungsgemäße Spritzgußartikel hat den Vorteil, dass diese sowohl in der Längsrichtung als auch in der Querrichtung dieselben oder nahezu dieselben mechanischen Eigenschaften, beispielsweise Bruchdehnung, aufweisen und dies zu einer Verbesserung des Anisotropiefaktors führt.

Die erfindungsgemäße thermoplastische Elastomermischung kann im Automobilinnenraum, zur Erhöhung der Heißlichtechtheit für Autoinnenraumanwendungen, als Dichtprofil für Hinterglasanwendungen im Automobilbau und bei Bau, sowie im Automobilbau und der Elektrotechnik für Dichtungen im Bereich von Lampen eingesetzt werden, bevorzugt sind Anwendungen mit dynamischer Beanspruchung.

Beispiele

Herstellung der Kompounds

Die Kompoundierung erfolgt auf einem gleichsinnig drehenden, dichtkämmenden Doppelschneckenextruder vom Typ ZSK 30 der Firma Coperion (ehemals Werner & Pfleiderer).

Dry-Blends:

Die Dry-Blends, bestehend aus Vormischung und Thermoplast, werden auf einem Vertikal-Universalmischer der Firma MTI hergestellt und über eine gravimetrische Dosierung (Firma Gericke) dem Einzug des Extruders zugeführt. Bevorzugt werden die Vormischung und der Thermoplast über getrennte gravimetrische Dosierung dem Einzug des Extruders zugeführt.

Die Vormischung besteht aus 100 Teilen SEEPS (Styrol-Ethylen-Ethylenpropylen-Styrol). Hinzugefügt wird eine Mischung, bestehend aus 100 Teilen Weißöl und 30 Teilen Polypropylen-Homopolymer (PP-h).

Füllstoffe:

Für die Versuche werden Füllstoffe (FS), ausgewählt aus der Gruppe gefällte Kieselsäure, gefälltes Silikat oder Ruß im Vergleich zu pyrogener Kieselsäure, verwendet:

**FS1:** Gefälltes feinverteiltes Calciumsilikat mit einem Calcium-Gehalt von ca. 6% in Form von CaO (SIPERNAT® 880 der Firma Evonik Degussa GmbH).

**FS2:** Pigmentruß, hergestellt nach dem Furnace-Verfahren (PRINTEX® alpha der Firma Evonik Carbon Black GmbH).

**FS3:** Pyrogene mit Dichlordimethylsilan hydrophobierte Kieselsäure, der ein hydrophiles Ausgangsmaterial mit einer Oberfläche von 130 $m^2/g$ zugrunde liegt(AEROSIL® R 972 V der Firma Evonik Degussa GmbH).

**FS4:** Pyrogene mit Dichlordimethylsilan hydrophobierte Kieselsäure, der ein hydrophiles Ausgangsmaterial mit einer Oberfläche von 200 $m^2/g$ zugrunde liegt. Nach der Hydrophobierung wird zusätzlich eine Strukturmodifizierung vorgenommen (AEROSIL® R 9200 der Firma Evonik Degussa GmbH).

Die physikalisch-chemischen Daten der eingesetzten Füllstoffe sind in den Tabellen 1-4 aufgeführt.

Tabelle 1: SIPERNAT® 880 (Gefälltes Calciumsilikat)

| **Eigenschaften** | **Einheit** | **Richtwerte** |
|---|---|---|
| Spezifische Oberfläche (BET) | $m^2/g$ | 35 |
| Partikelgröße, d50 nach ISO 13320-1 | µm | 9 |
| Stampfdichte (ca. Wert)* in Anl. an DIN EN ISO 787/11, Aug. 1983 | g/l | ca. 300 |

(fortgesetzt)

| Eigenschaften | Einheit | Richtwerte |
|---|---|---|
| Trocknungsverlust 2 h bei 105 °C | Gew.-% | ca. 6 |
| pH-Wert<br>5 % in Wasser | | 10,5 |
| $SiO_2$Gehalt, bezogen auf die geglühte Substanz | Gew.-% | 91 |
| $Al_2O_3$-Gehalt | Gew.-% | 0,2 |
| $Fe_2O_3$-Gehalt | Gew.-% | ≤0,03 |
| DBP Adsorption Nach DIN 53601 | g/100g | 185 |
| * ab Werk | | |

Tabelle 2: PRINTEX® alpha (Pigmentruß hergestellt nach dem Furnace-Verfahren)

| Eigenschaften | Einheit | Richtwerte |
|---|---|---|
| Typ | | Furnace |
| Schwarzzahl My | | 240 |
| Relative Farbstärke IRB 3 = 100 | % | 100 |
| Flüchtige Anteile bei 950 °C | % | 0,5 |
| OAN, bestimmt mit DBP (ISO 4656) | ml/100g | 100 |
| pH-Wert (ISO 787-9) | | 8,7 |
| Glührückstand (ISO 1125) | % | <0,02 |
| BET-Oberfläche (ISO 4652) | $m^2/g$ | 105 |
| Mittlere Primärteilchengröße | nm | 20 |

Tabelle 3: AEROSIL® R 972 V (Verdichtete hydrophobe pyrogene Kieselsäure)

| Eigenschaften | Einheit | Richtwerte |
|---|---|---|
| Spezifische Oberfläche (BET) | $m^2/g$ | 110 ± 20 |
| C-Gehalt | Gew.-% | 0,6 - 1,2 |
| Mittlere Größe der Primärteilchen | Nm | 16 |
| Stampfdichte (ca. Wert)* in Anl. an DIN ISO 787/11, Aug. 1983 | g/l | Ca. 90 |
| Trocknungsverlust*<br>2 h bei 105 °C | Gew.-% | ≤ 0,5 |
| Glühverlust, 2 h bei 1000 °C, bezogen auf die getrocknete Substanz, (2 h bei 105 °C) | Gew.-% | ≤ 2,0 |
| pH-Wert<br>4 %-ige Dispersion | | 3, 6 - 4,4 |
| $SiO_2$Gehalt, bezogen auf die geglühte Substanz | Gew.-% | ≤ 99,8 |
| * ab Werk | | |

Tabelle 4: AEROSIL® R 9200 (Strukturmodifizierte, hydrophobe pyrogene Kieselsäure)

| Eigenschaften | Einheit | Richtwerte |
|---|---|---|
| Spezifische Oberfläche (BET) | m2/g | 170 ± 20 |
| C-Gehalt | Gew.-% | 0,7 - 1,3 |
| Stampfdichte (ca. Wert)* in Anl. an DIN EN ISO 787/11, Aug. 1983 | g/l | ca. 200 |
| Trocknungsverlust 2 h bei 105 °C | Gew.-% | ≤1,5 |
| pH-Wert 4 %-ige Dispersion | | 3,0 - 5,0 |
| SiO2Gehalt, bezogen auf die geglühte Substanz | Gew.-% | ≤ 99,8 |
| A1203-Gehalt | Gew.-% | ≤ 0,10 |
| Fe203-Gehalt | Gew.-% | ≤ 0,01 |
| Ti02-Gehalt | Gew.-% | ≤ 0,03 |
| HCl-Gehalt | Gew.-% | ≤ 0,025 |
| * ab Werk | | |

Füllstoffzugabe:

Die Zugabe des Füllstoffes (FS1-4) kann auf zwei unterschiedliche Weisen erfolgen:

1. Sie kann direkt in Pulverform zugegeben werden. Dazu wird der gesamte Füllstoffanteil über eine separate gravimetrische Dosierung mittels Seitenextruder in den Schmelzstrom des Extruders gefördert. Nachfolgend wird diese Variante als Pulver-Variante bezeichnet.

2. Die Zugabe des Füllstoffes erfolgt mittels eines Masterbatches, wobei die Füllstoffe, ausgewählt aus der Gruppe gefällte Kieselsäure, gefälltes Silikat oder Ruß, zuerst mit dem Polypropylen-Homopolymer kompoundiert werden.

Die Parametereinstellungen des ZSK 30 Extruders für die Masterbatch Herstellung sind in Tabelle 5 dargestellt.

Tabelle 5:

| Einstellungen Extruder | |
|---|---|
| Drehzahl, Upm | 250 |
| Durchsatz, kg/h | 5 - 15 |
| Gehäusetemp., °C | 220 - 270 |
| **Istwerte** | |
| Schmelzetemp., °C | 180 - 210 |
| Schmelzedruck, bar | > 20 |

Nachfolgend wird diese Variante als Masterbatch-Variante bezeichnet.

Thermoplastische Elastomermischung:

Das Masterbatch wird zusammen mit dem Dry-Blend (bestehend aus Vormischung und Thermoplast) auf einem Vertikal-Universalmischer der Firma MTI hergestellt und über eine gravimetrische Dosierung (Firma Gericke) dem Einzug des Extruders zugeführt. Bevorzugt wird das Masterbatch mit ggf. weiterem Thermoplast vorgemischt und über getrennte

gravimetrische Dosierung dem Einzug des Extruders zugeführt. Der in der gesamten Formulierung benötigte Anteil Thermoplast (Polypropylen-Homopolymer) muss gleich bleiben und wird teilweise durch das im Masterbatch enthaltenen Polypropylen-Homopolymer ersetzt.

Die Parametereinstellungen des ZSK 30 Extruders für die Elastomermischungsherstellung sind in Tabelle 6 dargestellt.

Tabelle 6:

| **Einstellungen Extruder** | |
|---|---|
| Drehzahl, Upm | 250 - 300 |
| Durchsatz, kg/h | 5 - 15 |
| Gehäusetemp., °C | 150 - 230 |
| **Istwerte** | |
| Schmelzetemp., °C | 170 - 200 |
| Schmelzedruck, bar | > 20 |

Spritzgießen:

Von allen Elastomermischungen werden Platten mit den Abmessungen 110 mm x 75 mm x 2 mm nach herkömmlichen Spritzgussverfahren mit Filmanguss hergestellt (Maschinenparameter in Tabelle 7).

Tabelle 7:

| **Einstellungen 2 - mm - Platte** | |
|---|---|
| Gehäusetemperatur, °C | 180 - 200 |
| Schneckenumfangsgeschwindigkeit, mm/sec | 150 - 170 |
| Staudruck, bar | 40 - 50 |
| Einspritzgeschwindigkeit, % | 55 - 65 |
| Nachdruckzeit, sec. | 5 - 25 |
| Nachdruck, bar | 280 - 500 |
| Werkzeugtemperatur, °C | 30 - 35 |
| Kühlzeit | 15 - 25 |

An den Platten der Elastomermischungen werden die folgenden Prüfungen durchgeführt:

- Härteprüfung nach Shore A gemäß DIN 53 505,
- Bestimmung von Reißfestigkeit, Zugfestigkeit, Reißdehnung und Spannungswerten im Zugversuch längs / quer, gemäß DIN 53 504 / S2-Stab,
- Druckverformungsrest (DVR) nach DIN 53717.

Die Probekörper für die Prüfungen werden aus den Spritzgießplatten ausgestanzt. Aufgrund des stirnseitigen Filmangusses der Platte kommt es zu Fließorientierungen der Schmelze. Die Fließorientierung führt zu anisotropen Eigenschaften der Platte. Um die Auswirkung auf die Anisotropie zu erkennen, werden die Probekörper jeweils längs und quer zur Fließorientierung aus den Platten gestanzt.

Fließverhalten:

An den Elastomermischungen werden die folgenden Prüfungen zur Ermittlung der Fließfähigkeit durchgeführt:

- Fließfähigkeit mit einem Spiraltest
  Bei diesem Spiraltest wird eine Spritzgussform in Form einer Spirale mit Kunststoffschmelze gefüllt. Die Spiralform hat eine Halbrundform (Tiefe 5,2 mm, Breite 7,0 mm) und eine Länge von 100 cm. Die Länge der Spritzgusskörper wird mit einer dazugehörenden Längenmesseinrichtung abgelesen (+/- 5 mm) und in cm angegeben. Nach 10 Probekörpern zur Konditionierung der Form werden die nächsten 10 Probekörper gemessen (Mittelwert). Die Spritzbedingungen werden möglichst so gewählt, dass mit der Referenz (Nullprobe) Werte von 80 - 90 cm erreicht werden. Mit diesen Einstellungen werden Formulierungen mit Füllstoff bezüglich Fließverhalten gemessen.

Beispiel 1:

Es wird eine TPE-S Elastomermischung gemäß den oben beschriebenen Anweisungen hergestellt. Der jeweilige Füllgrad an FS1-4 beträgt 8 Gew.-%, wobei die Zugabe über einen Masterbatch erfolgt.

An dieser Elastomermischung wird mittels Spritzgussmaschine eine Fließspirale (12fach Bestimmung) unter definierten Bedingungen (Tabelle 8) hergestellt, um die Fließfähigkeit der verschiedenen TPE-S Elastomermischungen beurteilen zu können.

Tabelle 8:

| **Spritzguss-Einstellungen "Fliebspirale"** | |
|---|---|
| Gehäusetemperatur, °C | 180 - 200 |
| Einspritzzeit, sec | 8 - 12 |
| Spritzdruck, % | 20 - 40 |
| Zykluszeit, sec | 30 - 40 |
| Werkzeugtemperatur, °C | 30 - 35 |

Überraschenderweise stellt sich bei dieser Untersuchung heraus, dass die Fließfähigkeit des TPE-S Elastomermischung durch den Einsatz des FS1 nicht verändert und durch FS2 nur geringfügig verändert wird (Tabelle 9). Durch den Einsatz des FS3 hingegen wird die Fließfähigkeit signifikant verschlechtert.

Die Referenzmischung hat die gleiche Zusammensetzung wie die Mischungen mit FS1-4, jedoch ohne Füllstoff.

Tabelle 9:

| **Additiv (8%)** | **Messung** | **Referenz** Ref. | **FS1** erf. | **FS2** erf. | **FS3** Ref. | **FS4** Ref. |
|---|---|---|---|---|---|---|
| Spirallänge [cm] | 1 | 62 | 62 | 55,5 | 38 | 58 |
| | 2 | 62 | 61,5 | 56 | 38,5 | 57 |
| | 3 | 62 | 62 | 56 | 38 | 57 |
| | 4 | 62 | 61,5 | 55,5 | 38,5 | 57,5 |
| | 5 | 62 | 61,5 | 55,5 | 38,5 | 57,5 |
| | 6 | 61,5 | 61 | 55 | 38 | 56,5 |
| | 7 | 61,5 | 62 | 55,5 | 38 | 57,5 |
| | 8 | 62,5 | 61,5 | 55,5 | 38,5 | 57,5 |
| | 9 | 62 | 62 | 55,5 | 38,5 | 57 |
| | 10 | 62 | 61,5 | 55,5 | 38 | 57 |
| | 11 | 62 | 62 | 55,5 | 38 | 56,5 |
| | 12 | 62 | 61 | 55,5 | 38 | 56 |
| **Mittelwert Spirallänge [cm]** | | **62,0** | **61,6** | **55,5** | **38,2** | **57,1** |
| | | | | | | |

Beispiel 2

Es wird ein TPE-S Elastomermischung gemäß oben beschriebener Anweisungen nach der Masterbatch-Variante hergestellt.

Der Füllgrad an FS1-4 beträgt 8%. Die Zugabe von FS1-4 erfolgt über ein 40%iges Masterbatch.

Die mechanischen Eigenschaften (in längs- und querRichtung) werden gegenüber der ungefüllten TPE-S Elastomermischung verglichen.

Die Herstellung der Probekörper erfolgt wie im Absatz Spritzgießen beschrieben.

Die Referenzmischung hat die gleiche Zusammensetzung wie die Mischungen mit FS1-4, jedoch ohne Füllstoff.

Tabelle 10:

| **Längsrichtung** | **Härte** [Shore A] | **Zugfestigkeit längs** [MPa] | **Bruchdehnung längs** [%] | **Druckverformungsrest (24h 70°C)** [%] |
|---|---|---|---|---|
| Referenz | 55 | 5,0 | 509 | 40 |
| 8% FS1 (erf.) | 56 | 12,1 | 638 | 44 |
| 8% FS2 (erf.) | 60 | 13,5 | 628 | 41 |
| 8% FS3 (Ref.) | 54 | 7,8 | 434 | 40 |
| 8% FS4 (Ref.) | 56 | 10,5 | 668 | 44 |

Tabelle 11:

| **Querrichtung** | **Härte [Shore A]** | **Zugfestigkeit quer [MPa]** | **Bruchdehnung quer [%]** | **Druckverformungsrest (24h 70°C) [%]** |
|---|---|---|---|---|
| Referenz | 55 | 15,4 | 806 | 40 |
| 8% FS1 (erf.) | 56 | 16,1 | 703 | 44 |
| 8% FS2 (erf.) | 60 | 19,3 | 700 | 41 |
| 8% FS3 (Ref.) | 56 | 15,2 | 625 | 40 |
| 8% FS4 (Ref.) | 56 | 18,6 | 820 | 44 |

Überraschenderweise wird gefunden, dass durch den Einsatz der Füllstoffe FS1 und FS2, im Vergleich zu pyrogener Kieselsäure FS3 und FS4 die Zugfestigkeit in Längsrichtung gesteigert werden konnte, wobei vorteilhafterweise der Druckverformungsrest auf dem gleichen Niveau gehalten werden kann.

Tabelle 12:

| | **Bruchdehnung längs [%]** | **Bruchdehnung quer [%]** | **Anisotropiefaktor** |
|---|---|---|---|
| Referenz | 509 | 806 | 0,63 |
| 8% FS1 (erf.) | 638 | 703 | 0,91 |
| 8% FS2 (erf.) | 628 | 700 | 0,90 |
| 8% FS3 (Ref.) | 434 | 625 | 0,69 |
| 8% FS4 (Ref.) | 668 | 820 | 0,81 |

Resultierend aus den beiden Bruchdehnungstabellen 10 und 11 ergibt sich ein neuer sehr wichtiger Vorteil der erfindungsgemäßen thermoplastischen Elastomere mit den verwendeten Füllstoffen FS1 und FS2 im Vergleich zu pyrogener Kieselsäure FS3 und FS4 in TPE-S.

Durch die Änderung der Bruchdehnung (längs) auf das Niveau der Bruchdehnung (quer) nähern sich die Bruchdehnungseigenschaften längs und quer einander an, was die Dimensionsstabilität im späteren Bauteil erhöht. Diese Verbesserung der Eigenschaft wird in der Tabelle 12 mit dem Anisotropiefaktor (Faktor aus Bruchdehnung (längs) zu Bruchdehnung (quer)) beschrieben. Ein Anisotropiefaktor von 1 stellt den Idealfall dar.

Beispiel 3

Es wird eine TPE-S Elastomermischung gemäß oben beschriebener Anweisungen nach der Masterbatch-Variante sowie nach der Pulver-Variante hergestellt.

Die Unterschiede der Zugabemethode werden am Füllstoff FS1 mit einem Füllgrad von 8% dargestellt. Die Zugabe von FS1 erfolgt über ein 40%iges Masterbatch bei der Masterbatch-Variante. Bei der Pulver-Variante erfolgt die Zugabe des gesamten Füllstoffanteils FS1 über eine separate gravimetrische Dosierung mittels Seitenextruder in den Schmelzestrom des Extruders.

Die mechanischen Eigenschaften (in längs- und querRichtung) werden gegenüber der ungefüllten TPE-S Elastomermischung verglichen (Tabelle 13 und 14).

Die Referenzmischung hat die gleiche Zusammensetzung wie die Mischung mit FS1, jedoch ohne Füllstoff.

Tabelle 13:

| | **Härte** [Shore A] | **Zugfestigkeit längs** [MPa] | **Bruchdehnung längs** [%] | **Druckverformungsrest (24h 70°C)** [%] |
|---|---|---|---|---|
| Referenz | 55 | 5,0 | 509 | 40 |
| Pulver-Variante | 61 | 5,9 | 512 | 43 |
| Masterbatch-Variante | 56 | 12,1 | 638 | 44 |

Tabelle 14:

| | **Härte** [Shore A] | **Zugfestigkeit quer** [MPa] | **Bruchdehnung quer** [%] | **Druckverformungsrest (24h 70°C)** [%] |
|---|---|---|---|---|
| Referenz | 55 | 15,4 | 806 | 40 |
| Pulver-Variante | 61 | 11,5 | 726 | 43 |
| Masterbatch-Variante | 56 | 16,1 | 703 | 44 |

Überraschenderweise wird gefunden, dass durch den Einsatz des Füllstoffs FS1 eine signifikante Verbesserung der TPE-S Elastomermischung bezüglich Zugfestigkeit und Bruchdehnung in Längsrichtung erzielt werden kann, wenn der Füllstoff über die erfindungsgemäße Masterbatch-Variante zugegeben wird.

## Patentansprüche

1. Thermoplastische Elastomermischung, **dadurch gekennzeichnet, dass** diese mindestens ein thermoplastisches Elastomer TPE, ausgenommen ein thermoplastisches Polyurethan TPU, und mindestens einen Füllstoff aus der Gruppe gefällte Kieselsäure, gefälltes Silikat oder Ruß enthält.

2. Thermoplastische Elastomermischung gemäß Anspruch 1, **dadurch gekennzeichnet, dass** diese ein Thermoplast enthält.

3. Thermoplastische Elastomermischung gemäß Anspruch 2, **dadurch gekennzeichnet, dass** der Thermoplast Polypropylen ist.

4. Thermoplastische Elastomermischung gemäß Anspruch 1, **dadurch gekennzeichnet, dass** diese eine Ölkomponente enthält.

5. Thermoplastische Elastomermischung gemäß der Ansprüche 3 und 4, **dadurch gekennzeichnet, dass** der Füllstoff ein gefälltes Silikat, der Thermoplast ein Polypropylen und das thermoplastische Elastomer ein Styrolblockcopolymer ist.

6. Verfahren zur Herstellung der thermoplastischen Elastomermischung gemäß Anspruch 1, **dadurch gekennzeichnet, dass** man in einem ersten Schritt mindestens einen Füllstoff, ausgewählt aus der Gruppe gefällte Kieselsäure, gefälltes Silikat oder Ruß, und mindestens ein Thermoplast zu einem Masterbatch mischt und in einem zweiten Schritt den Masterbatch mit mindestens einem thermoplastischen Elastomer, ausgenommen ein thermoplastisches Polyurethan TPU, mischt.

7. Verfahren zur Herstellung der thermoplastischen Elastomermischung gemäß Anspruch 6, **dadurch gekennzeichnet, dass** das Thermoplast ein Polypropylen ist.

8. Verwendung der thermoplastischen Elastomermischung gemäß Anspruch 1 zur Herstellung von Spritzgußartikeln.

9. Verfahren zur Verbesserung der isotropen mechanischen Eigenschaften von Spritzgußartikeln, **dadurch gekennzeichnet, dass** man in einem ersten Schritt mindestens einen Füllstoff, ausgewählt aus der Gruppe gefällte Kieselsäuren, gefällte Silikate oder Ruß, und mindestens einen Thermoplasten zu einem Masterbatch mischt und in einem zweiten Schritt den Masterbatch mit mindestens einem thermoplastischen Elastomer, ausgenommen ein thermoplastisches Polyurethan TPU, mischt.

10. Spritzgußartikel, enthaltend die thermoplastische Elastomermischung gemäß Anspruch 1, **dadurch gekennzeichnet, dass** der Anisotropiefaktor gegenüber einem mit gleichem Verfahren und gleicher Zusammensetzung, wobei der Füllstoff eine pyrogene Kieselsäure ist, hergestellten Spritzgußartikel, verbessert ist.

11. Spritzgußartikel gemäß Anspruch 10, **dadurch gekennzeichnet, dass** der Anisotropiefaktor 0,88 bis 1,12 ist.

Europäisches Patentamt
European Patent Office
Office européen des brevets

# EUROPÄISCHER RECHERCHENBERICHT

Nummer der Anmeldung
EP 10 18 7980

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2005/019335 A1 (ADVANCED ELASTOMER SYSTEMS [US]; OUHADI TRAZOLLAH [BE]; KENENS LEANDER) 3. März 2005 (2005-03-03)<br>* Seite 20, Zeile 13; Anspruch 18; Beispiele 1-15 *<br>----- | 1-4,6-9 | INV.<br>C08L23/16 |
| X | WO 01/04208 A1 (NITRIFLEX S A IND E COM [BR]) 18. Januar 2001 (2001-01-18)<br>* reference examples 3 and 5 *<br>----- | 1,2,4 | |
| X | EP 0 218 134 A2 (DEGUSSA [DE]; BOERNER GEORG CHEM WERK [DE])<br>15. April 1987 (1987-04-15)<br>* Beispiel 1 *<br>----- | 1 | |
| X,P | EP 2 123 706 A1 (EVONIK DEGUSSA GMBH [DE])<br>25. November 2009 (2009-11-25)<br>* das ganze Dokument *<br>----- | 1-11 | |
| | | | RECHERCHIERTE SACHGEBIETE (IPC) |
| | | | C08L |

Der vorliegende Recherchenbericht wurde für alle Patentansprüche erstellt

1

| Recherchenort | Abschlußdatum der Recherche | Prüfer |
|---|---|---|
| München | 26. Januar 2011 | Knutzen-Mies, Karen |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 10 18 7980

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-01-2011

| Im Recherchenbericht angeführtes Patentdokument | Datum der Veröffentlichung | Mitglied(er) der Patentfamilie | Datum der Veröffentlichung |
|---|---|---|---|
| WO 2005019335 A1 | 03-03-2005 | AT 374797 T | 15-10-2007 |
| | | DE 602004009315 T2 | 10-07-2008 |
| | | EP 1656422 A1 | 17-05-2006 |
| | | ES 2290756 T3 | 16-02-2008 |
| WO 0104208 A1 | 18-01-2001 | BR 9902743 A | 06-03-2001 |
| | | EP 1161493 A1 | 12-12-2001 |
| EP 0218134 A2 | 15-04-1987 | DE 3535581 A1 | 16-04-1987 |
| | | DK 471186 A | 06-04-1987 |
| | | FI 863853 A | 06-04-1987 |
| | | NO 863597 A | 06-04-1987 |
| EP 2123706 A1 | 25-11-2009 | WO 2009141185 A1 | 26-11-2009 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1736505 A
- EP 08166704 A
- EP 2009053404 W
- EP 1655331 A
- DE 19521565
- WO 9845361 A
- DE 19613796
- WO 9842778 A
- US 6342565 B


### In der Beschreibung aufgeführte Nicht-Patentliteratur


- Pigment + Füllstoff Tabellen, Olaf Lueckert. Verlag O. Lueckert, 1994, 506-612